# EUROPÄISCHE PATENTSCHRIFT

(11) **EP 1 076 620 B1**
(45) Veröffentlichungstag und Bekanntmachung des Hinweises auf die Patenterteilung: **23.03.2005**
(21) Anmeldenummer: 99957896.6
(22) Anmeldetag: 13.10.1999
(51) Int. Cl.: B60S 1/34, B60S 1/24

(54) **VORRICHTUNG ZUM BEFESTIGEN EINES LENKHEBELS AN EINER ACHSE**
DEVICE FOR FIXING A CONTROL ARM TO AN AXLE
DISPOSITIF POUR FIXER UN LEVIER DE COMMANDE SUR UN ARBRE

(30) Priorität: 08.03.1999 DE 19910118
(43) Veröffentlichungstag der Anmeldung: 21.02.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/003285
(87) Internationale Veröffentlichungsnummer: WO 2000/053468

(56) Entgegenhaltungen:
- WO-A-99/10210
- DE-A- 4 428 371
- DE-A- 19 824 640
- US-A- 5 621 943

## Beschreibung

### Stand der Technik

Die Erfindung geht aus von einer Vorrichtung zum Befestigen eines Wischarms nach dem Oberbegriff des Anspruchs 1.

Wischeranlagen mit mehreren Scheibenwischern für Kraftfahrzeuge werden mit deren Wischerlagern direkt oder indirekt über eine Platine an der Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind.

Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen mit ihr verbundenen Wischarm mit einem Wischblatt über eine Windschutzscheibe. Um eine vom Wischblatt überstrichene Wischfläche günstig einer Form der Windschutzscheibe anzupassen, ist bekannt, den Wischarm über ein Hebelgetriebe anzutreiben. Das Hebelgetriebe weist in der Regel einen auf der Antriebswelle befestigten Antriebshebel und einen auf einer Achse gelagerten Lenkerhebel auf, die gelenkig mit einem mit dem Wischarm verbundenen Wischhebel verbunden sind.

Bei bekannten Scheibenwischern weist das Wellenende und das Achsende einen Außenkonus auf, auf den der Antriebshebel bzw. der Lenkerhebel mit einem passenden Innenkonus aufgedrückt und mittels einer Mutter festgeklemmt wird. Bei dieser Art der Verbindung können sich Fertigungstoleranzen ungünstig addieren, so daß eine genaue Position in axialer Richtung des Antriebshebels relativ zur Antriebswelle und des Lenkerhebels zur Achse nur schwer gewährleistet werden kann. Ferner wirkt sich das Anzugsmoment der Mutter auf die Lage der Hebel aus. Die Toleranzen und unterschiedliche Anzugsmomente können zu Verspannungen des Hebelgetriebes und zu einem erhöhten Verschleiß der Lagerstellen führen.

Eine solche Vorrichtung mit den Merkmalen des Anspruchs 1 ist aus DE-A-19824640 bekannt.

Aus der DE 44 28 371 A1 ist eine Wellennabenverbindung eines Wischers bekannt, bei der die Antriebswelle einen von der Kreissymmetrie abweichenden Querschnittsbereich und eine Anlageschulter aufweist. Zwischen die Antriebswelle und dem Befestigungsteil ist ein Druckstück eingelegt, das eine Öffnung aufweist, die bereits vor der Montage entsprechend dem von der Kreissymmetrie abweichenden Querschnittsbereich ausgeführt ist und die Antriebswelle formschlüssig umgreift. Ferner besitzt das Druckstück einen Außenkonus, mit dem es über ein lösbares Befestigungselement auf der Antriebswelle in einen entsprechend geformten Innenkonus des Befestigungsteils gedrückt wird. Das Befestigungsteil wird von dem Befestigungselement über das Druckstück auf die Anlageschulter gepreßt und in Wellenlängsrichtung fixiert.

Bei der vorgeschlagenen Lösung beeinflussen Fertigungstoleranzen nur im geringen Maß die Positioniergenauigkeit des Wischarms. Der Wischarm kann mit einem hohen Anzugsmoment ohne Einfluß auf die Positioniergenauigkeit des Wischarms befestigt werden.

### Vorteile der Erfindung

Nach der Erfindung gemäß Anspruch 1 ist ein Lenkerhebel eines Hebelgetriebes in Montagerichtung an einer Anlageschulter auf der Achse abgestützt. Der Lenkerhebel ist in axialer Richtung an einer definierten Stelle gelagert. Fertigungstoleranzen des Lenkerhebels und der Achse wirken sich nur im geringen Maße auf die Position des Lenkerhebels zur Achse aus. Der Lenkerhebel kann ohne Einfluß auf die Positionsgenauigkeit durch ein Befestigungselement mit einer hohen axialen Kraft auf der Anlageschulter befestigt werden. Durch eine genaue Lage des Lenkerhebels auf der Achse können Verspannungen und Verschleiß im Hebelgetriebe reduziert werden. Besonders vorteilhaft ist neben dem Lenkerhebel der Antriebshebel in Montagerichtung an einer Anlageschulter auf der Antriebswelle abgestützt. Der Antriebshebel und der Lenkerhebel können an aufeinander abgestimmten genauen Positionen in axialer Richtung auf der Antriebswelle bzw. auf der Achse befestigt werden. Ungewünschte Höhenunterschiede zwischen dem Antriebshebel und dem Lenkerhebel und Verspannungen können vermieden werden.

Der Lenkerhebel ist dabei über eine Scheibe auf der Anlageschulter abgestützt. Mit einer Scheibe kann der Durchmesser der Achse kleiner und dadurch die Achse kostengünstiger ausgeführt werden. Ferner kann der Lenkerhebel vorteilhaft auf einer großen Fläche abgestützt werden, wodurch die Belastung des Lenkerhebels durch ein Kippmoment reduziert wird. Der Lenkerhebel kann abgestützt auf einer Scheibe an der Lagerstelle mit der Achse dünner, leichter und kostengünstiger ausgeführt werden.

Die Scheibenwischanlage mit den Antriebswellen und den Achsen wird in der Regel getrennt vom Hebelgetriebe und vom Wischarm zu einem Autohersteller geliefert. Erfindungsgemäß ist daher die Scheibe kraftschlüssig auf die Achse aufgepreßt, beispielsweise durch eine Preßpassung, eine konisch verlaufende Achse und/oder durch eine Phase. Die Scheibe ist verliersicher mit der Scheibenwischanlage verbunden und muß nicht separat geliefert werden. Ferner kann die Scheibe bei der Fertigung der Wischeranlage entsprechend positioniert und ausgerichtet werden. Der Lenkerhebel kann dadurch beim Fahrzeughersteller schnell und exakt auf der Scheibe montiert werden.

Weitere vorteilhafte Ausführungsformen sind in den abhängigen Ansprüchen angegeben.

Um eine eindeutige Lagerstelle zu erhalten, ist der Lenkerhebel drehfest mit einer schwenkbaren Achse verbunden. In der Regel wird der Lenkerhebel mit einer Mutter auf der Achse befestigt. Der Lenkerhebel und die Achse sollten daher bereits bei der Montage drehfest verbunden sein, um ein Mitdrehen der Achse bei der Montage zu vermeiden. Das wirkende Drehmoment zwischen der Achse und dem Lenkerhebel entsteht zum einen durch die Reibung der Achse in ihrer Lagerstelle und zum andern durch das Anziehen und Lösen der Mutter und ist kleiner als das Antriebsmoment. Vorteilhaft ist die drehfeste Verbindung zwischen der Achse und dem Lenkerhebel auf das kleine zu übertragende Drehmoment ausgelegt und kann dadurch kleiner, leichter und kostengünstiger ausgeführt werden. Dies wird mit einer erfindungsgemäßen Ausführung erreicht, bei der eine drehfeste Verbindung zwischen dem Lenkerhebel und der Achse über die Scheibe hergestellt ist. Ein wirkendes Kippmoment kann über die Scheibe abgestützt und das kleine wirkende Drehmoment kann über eine kurze axiale Verbindung übertragen werden, wodurch axiale Baulänge und Gewicht eingespart werden.

Vorteilhaft wird ein Kraftschluß zwischen der Achse und der Scheibe und ein Formschluß zwischen der Scheibe und dem Lenkerhebel genutzt. Die Welle kann rotationssymmetrisch und kostengünstig ausgeführt werden und die Scheibe ist verliersicher befestigt. Mit einem Formschluß zwischen der Scheibe und dem Lenkerhebel, ist der Lenkerhebel bereits nach dem Auflegen auf die Scheibe drehfest fixiert und kann einfach montiert werden. Der Lenkerhebel ist durch die Auflage auf der Scheibe in seiner Lage eindeutig bestimmt. Um eine überbestimmte Lagerung des Lenkerhebels zu vermeiden, sind die Scheibe und der Lenkerhebel über eine Spielpassung formschlüssig in Schwenkrichtung verbunden.

Ein konstruktiv einfacher und platzsparender Formschluß wird mit Seitenwänden des Lenkerhebels erreicht, die die Scheibe in Schwenkrichtung formschlüssig umgreifen, und zwar mit einem von der Kreissymmetrie abweichenden Querschnittsbereich, beispielsweise mit einer oder mehreren Abflachungen am Lenkerhebel und an der Scheibe. Ferner wird die zu übertragende Kraft vorteilhaft über einen großen Radius von dem Lenkerhebel auf die Scheibe eingeleitet, wodurch auf den Lenkerhebel nur kleine Kräfte wirken.

Um die Montage der Seitenwände auf der Scheibe zu erleichtern, wird vorgeschlagen, die Seitenwände in Montagerichtung mit einem von der Kreissymmetrie abweichenden kleineren Querschnittsbereich in einen größeren vorzugsweise runden Querschnittsbereich übergehend auszuführen. Der Lenkerhebel kann vorteilhaft in einem ersten Montageschritt mit dem größeren runden Querschnittsbereich auf der Scheibe positioniert und in einem zweiten Montageschritt durch drehen des Lenkerhebels oder der Scheibe mit der Achse mit dem von der Kreissymmetrie abweichenden Querschnittsbereich über der Scheibe zum Liegen gebracht werden, daß die Seitenwände und die Scheibe formschlüssig in Schwenkrichtung ineinander greifen können. Es wird eine einfache und schnelle Montage des Lenkerhebels ermöglicht.

Neben den vorgeschlagenen Verbindungen können der Lenkerhebel und die Scheibe sowie die Scheibe und die Achse jeweils kraft- und formschlüssig in Schwenkrichtung miteinander verbunden sein.

In einer Ausgestaltung der Erfindung besitzt die Antriebswelle einen von der Kreissymmetrie abweichenden Querschnittsbereich. Zwischen der Antriebswelle und dem Antriebshebel ist ein Druckstück eingelegt, das eine dem von der Kreissymmetrie abweichenden Querschnittsbereich entsprechende Öffnung aufweist und die Antriebswelle in Schwenkrichtung formschlüssig umgreift. Das Druckstück ist von einem lösbaren Befestigungselement, beispielsweise von einer Mutter, mit einem Außenkonus in einen Innenkonus des Antriebshebels gedrückt und mit dem Antriebshebel auf der Anlageschulter fixiert. Der Antriebshebel ist auf der Anlageschulter in axialer Richtung exakt positioniert. Das Druckstück ist in Schwenkrichtung über einen Formschluß mit der Antriebswelle verbunden, vorzugsweise über ein bis zwölf große tragende Flächen, beispielsweise über einen Sechskant oder eine elliptische Querschnittsfläche und kann dadurch leicht mit dem Antriebshebel von der Antriebswelle abgezogen bzw. demontiert werden. Um das Druckstück und insbesondere den Antriebshebel spielfrei auf der Antriebswelle zu lagern, ist in einer Ausgestaltung der von der Kreissymmetrie abweichende Querschnittsbereich der Antriebswelle zumindest in einem Bereich in Montagerichtung mit einem zunehmenden Durchmesser ausgeführt, auf den das Druckstück kraftschlüssig spielfrei fixierbar ist. Ferner trifft beim Aufschieben des Druckstücks zuerst ein größerer Innendurchmesser des Druckstücks auf einen kleineren Außendurchmesser der Antriebswelle, wodurch das Druckstück leicht montiert werden kann.

Ist der Lenkerhebel wie der Antriebshebel über ein Druckstück mit der Achse verbunden, ist dieser in axialer Richtung auf der Achse exakt positioniert und kann leicht mit dem Druckstück von der Achse abgezogen werden. Ferner werden mit einer gleichen Befestigung des Antriebshebels auf der Antriebswelle und des Lenkerhebels auf der Achse die Bauteilevielfalt und die Fertigungskosten reduziert.

Zwischen dem Lenkerhebel und der Achse wirkt nur ein kleines Drehmoment, so daß der Lenkerhebel vorteilhaft als Blechteil ausgeführt werden kann. Bei der drehfesten Verbindung des Lenkerhebels und der Achse über die Scheibe, wird das Drehmoment über einen großen Radius durch einen Formschluß übertragen und das Kippmoment auf der Scheibe über eine große Fläche abgestützt, was jeweils zu einer geringeren Belastung des Lenkerhebels beiträgt und für die Ausführung des Lenkerhebels als Blechteil spricht. Ferner kann bei den erfindungsgemäßen Ausführungen ein in Montagerichtung sich erweiternder Konus vermieden und der Lenkerhebel vorteilhaft von einer Seite in einem oder mehreren Tiefziehvorgängen hergestellt werden. Mit einem als Blechteil ausgeführten Lenkerhebel können Gewicht, Fertigungsaufwand und Kosten eingespart werden.

Um die Steifigkeit des Lenkerhebels im Bereich der Verbindungsstelle mit der Achse zu erhöhen, weist in einer Ausgestaltung der Lenkerhebel in einer Deckseite in diesem Bereich eine topfförmige Einbuchtung auf.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: einen Ausschnitt einer Scheibenwischanlage mit einem Hebelgetriebe,
- Fig. 2: einen Schnitt entlang der Ebene II in Fig. 1,
- Fig. 3: eine Explosionszeichnung eines Ausschnitts III in Fig. 2,
- Fig. 4: einen Lenkerhebel von unten,
- Fig. 5: eine nicht erfindungsgemäße Variante nach Fig. 3,
- Fig. 6: eine Achse nach Fig. 5 von oben,
- Fig. 7: eine Vorrichtung nach Fig. 5 im montierten Zustand,
- Fig. 8: eine Variante nach Fig. 2,
- Fig. 9: eine Achse von oben,
- Fig. 10: ein Druckstück von oben und
- Fig. 11: eine Scheibe von oben.

### Beschreibung der Ausführungsbeispiele

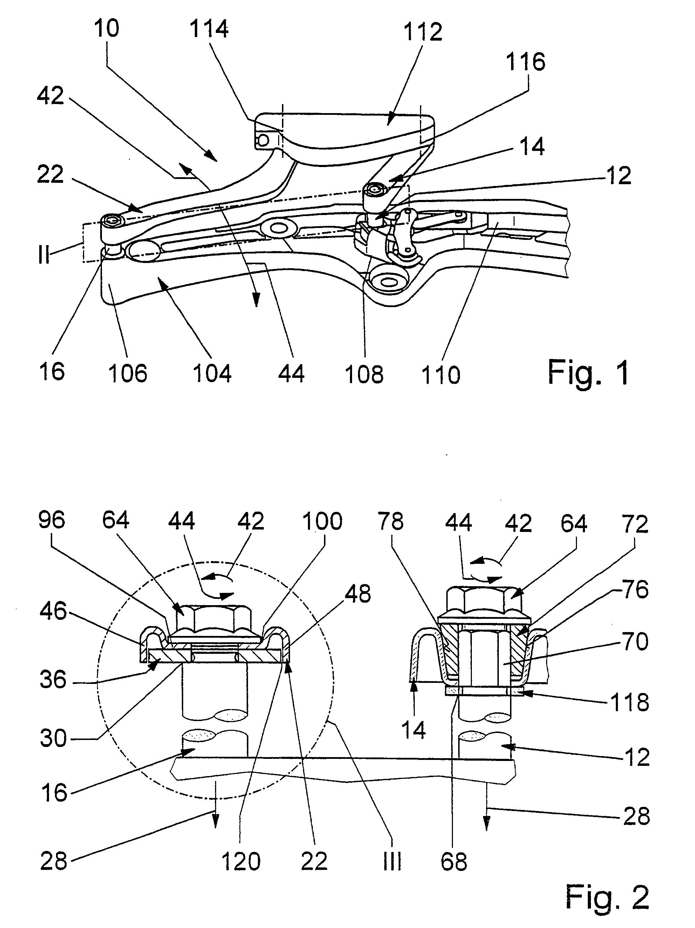

Fig. 1 zeigt einen Ausschnitt einer Wischeranlage für ein Kraftfahrzeug, deren Wischerlager 106, 108 über eine Platine 104 an einer Karosserie des Kraftfahrzeugs befestigt werden. Die Platine 104 trägt einen nicht näher dargestellten Wischerantrieb, der über ein Gestänge 110 eine Antriebswelle 12 antreibt. Die Antriebswelle 12 ist in dem Wischerlager 108 radial und axial gelagert, ragt aus der Karosserie und bewegt einen an ihrem freien Ende befestigten Antriebshebel 14 eines Hebelgetriebes 10. Neben dem Antriebshebel 14 besitzt das Hebelgetriebe 10 einen Lenkerhebel 22, der über eine schwenkbare Achse 16 in dem Wischerlager 106 gelagert ist und einen Wischhebel 112, der über zwei Lager 114 und 116 mit dem Antriebshebel 14 und dem Lenkerhebel 22 gelenkig verbunden ist. Der Wischhebel 112 bewegt einen daran befestigten nicht näher dargestellten Wischarm mit einem Wischblatt über eine Windschutzscheibe.

Erfindungsgemäß ist der Lenkerhebel 22 und vorzugsweise der Antriebshebel 14 in Montagerichtung 28 über eine Scheibe 36, 118 an einer Anlageschulter 30, 68 auf der Achse 16 bzw. der Antriebswelle 12 abgestützt (Fig. 2). Der Antriebshebel 14 und der Lenkerhebel 22 können an aufeinander abgestimmten genauen Positionen in axialer Richtung auf der Antriebswelle 12 bzw. auf der Achse 16 befestigt werden. Ungewünschte Höhenunterschiede zwischen dem Antriebshebel 14 und dem Lenkerhebel 22 und Verspannungen in den Wischerlagern 106, 108 und in den Lagern 114, 116 und ein daraus resultierender Verschleiß können vermieden werden.

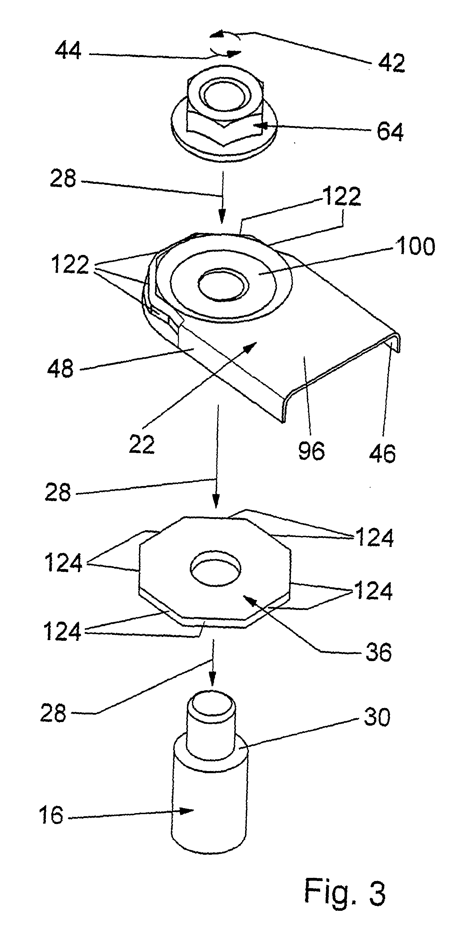

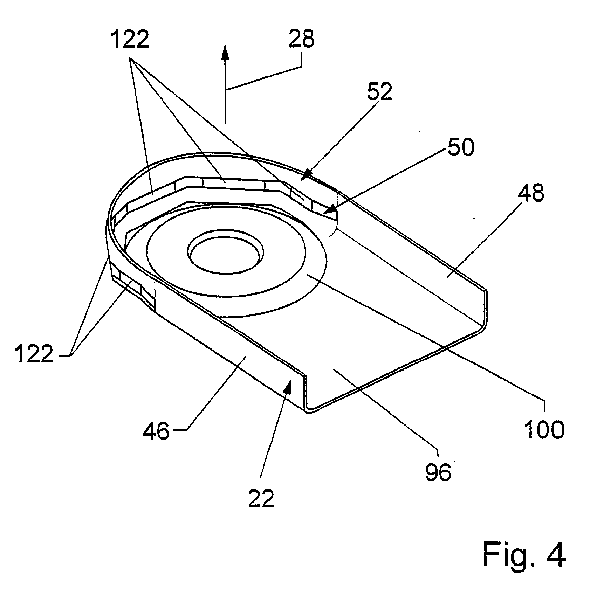

Die Scheibe 36 ist auf die rotationssymmetrische Achse 16 kraftschlüssig, unverlierbar aufgepreßt und ist in Schwenkrichtung 42, 44 fest mit der Achse 16 verbunden. Der als Blechteil ausgeführte Lenkerhebel 22 ist über eine Spielpassung 120 formschlüssig in Schwenkrichtung 42, 44 über die Scheibe 36 mit der Achse 16 verbunden, und zwar mit Seitenwänden 46, 48, die die Scheibe 36 formschlüssig umgreifen (Fig. 2 und 3). Um die Montage zu erleichtern, sind die Seitenwände 46, 48 in Montagerichtung 28 von einem von der Kreissymmetrie abweichenden kleineren Querschnittsbereich 50 in einen größeren vorzugsweise runden Querschnittsbereich 52 übergehend ausgeführt (Fig. 4). Der Lenkerhebel 22 kann vorteilhaft in einem ersten Montageschritt mit dem größeren runden Querschnittsbereich 52 auf der Scheibe 36 positioniert und in einem zweiten Montageschritt durch Drehen des Lenkerhebels 22 oder der Scheibe 36 mit der Achse 16 mit dem von der Kreissymmetrie abweichenden Querschnittsbereich 50 über der Scheibe 36 zum Liegen gebracht werden, so daß die Seitenwände 46, 48 und die Scheibe 36 formschlüssig in Schwenkrichtung 42, 44 ineinander greifen können. Der von der Kreissymmetrie abweichende Querschnittsbereich 50 besitzt Abflachungen 122, an denen Abflachungen 124 der Scheibe 36 formschlüssig zum Liegen kommen. Der Lenkerhebel 22 wird durch eine Mutter 64 über die Scheibe 36 auf der Anlageschulter 30 in axialer Richtung fixiert. Durch den Formschluß des Lenkerhebels 22 über die Scheibe 36 mit der Achse 16 kann die Mutter 64 angezogen und gelöst werden, ohne daß die Achse 16 mitdreht. Es wird eine einfache und schnelle Montage und Demontage des Lenkerhebels 22 ermöglicht.

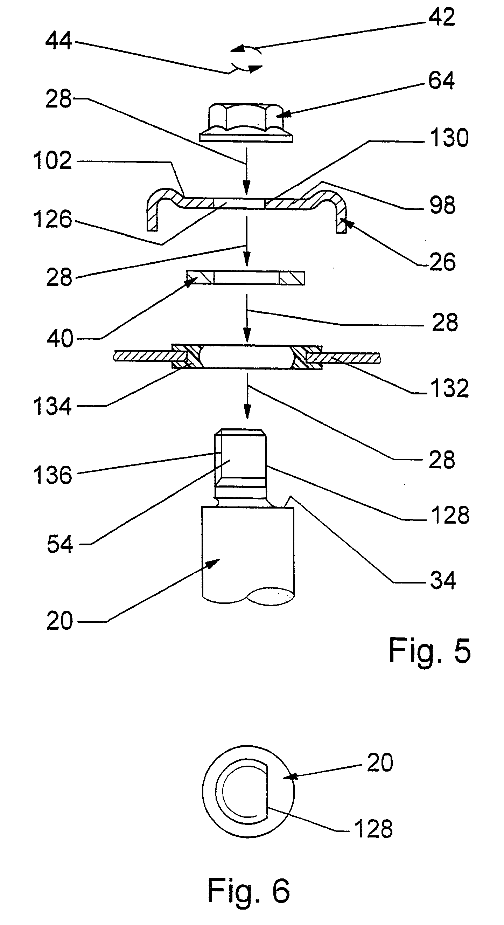

In Fig. 5, 6 und 7 ist ein Montage beispiel gezeigt, das nicht der Erfindung entspricht, und bei dem ein Lenkerhebel 26 anstatt über eine Scheibe 40 direkt mit einer Achse 20 unterhalb einem Gewinde 136 drehfest verbunden ist, und zwar besitzt die Achse 20 einen von der Kreissymmetrie abweichenden Querschnittsbereich 54, den der Lenkerhebel 26 in Schwenkrichtung 42, 44 mit einer entsprechend ausgeführten Öffnung 126 formschlüssig umgreift. Der von der Kreissymmetrie abweichende Querschnittsbereich 54 der Achse 20 besitzt eine Abflachung 128, auf der eine Abflachung 130 der Öffnung 126 zum Liegen kommt. Bei der Montage kann zuerst eine Windlaufabdeckung 132 mit einer Abdichtung 134 und anschließend die Scheibe 40 montiert werden, über die der Lenkerhebel 26 auf einer Anlageschulter 34 abgestützt wird. Eine Vormontage der Scheibe 40 kann entfallen und die Scheibe 40 kann im Vergleich zu der Scheibe 36 beim Ausführungsbeispiel in Fig. 3 kleiner ausgeführt werden. Der Lenkerhebel 26 wird wie der Lenkerhebel 22 mit einer Mutter 64 in axialer Richtung auf der Achse 20 fixiert.

Um die Steifigkeit der als Blechteil ausgeführten Lenkerhebel 22, 26 im Bereich der Verbindungsstelle mit der Achse 16 zu erhöhen, besitzen die Lenkerhebel 22, 26 in einer Deckseite 96, 98 eine topfförmige Einbuchtung 100, 102 (Fig. 2, 3, 4, 5 und 7).

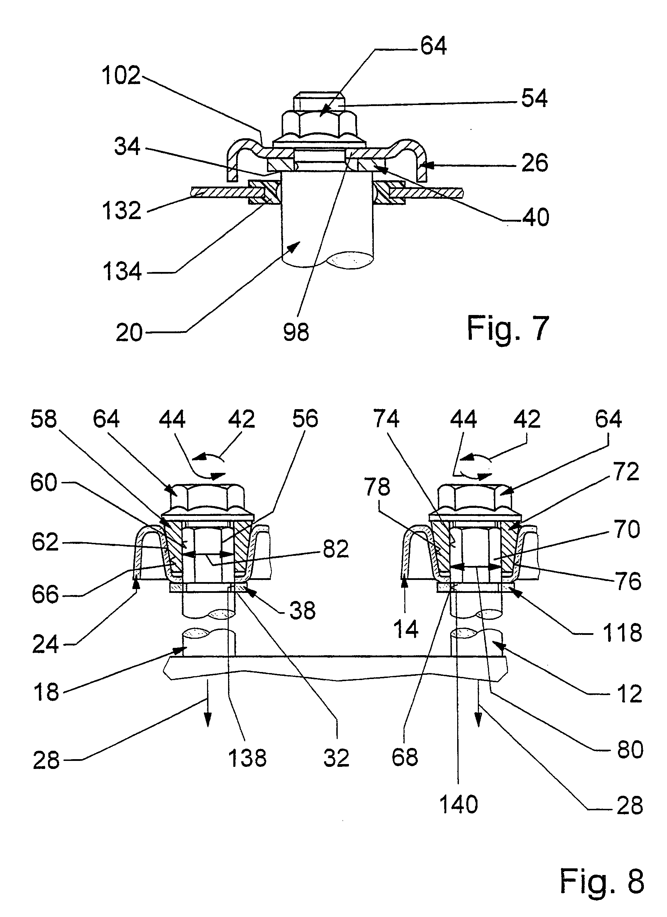

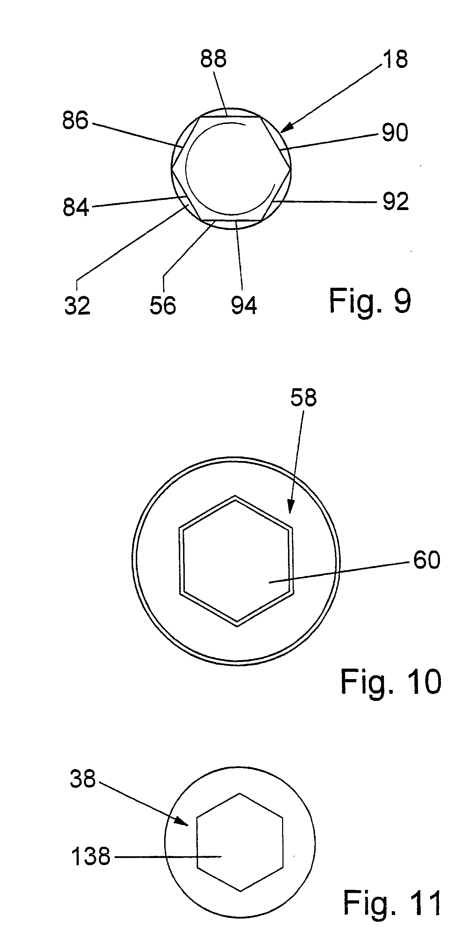

Um die Bauteilevielfalt zu reduzieren, ist im Ausführungsbeispiel in Fig. 8 eine Verbindung eines Lenkerhebels 24 mit einer Achse 18 wie die Verbindung des Antriebshebels 14 mit der Antriebswelle 12 ausgeführt. Die Antriebswelle 12 und die Achse 18 besitzen einen von der Kreissymmetrie abweichenden Querschnittsbereich 56, 70 (Fig. 2, 8 und 9). Zwischen der Antriebswelle 12 und dem Antriebshebel 14 bzw. dem Lenkerhebel 24 und der Achse 18 ist ein Druckstück 58, 72 eingelegt, das eine dem von der Kreissymmetrie abweichenden Querschnittsbereich 56, 70 entsprechende Öffnung 60, 74 aufweist (Fig. 8 und 10) und die Antriebswelle 12 bzw. Achse 18 in Schwenkrichtung 42, 44 formschlüssig umgreift. Das Druckstück 58, 72 ist von einer Mutter 64 mit einem Außenkonus 62, 76 in einen Innenkonus 66, 78 des Antriebshebels 14 bzw. des Lenkerhebels 24 gedrückt und mit diesem über eine Scheibe 38, 118 auf einer Anlageschulter 32, 68 fixiert (Fig. 8 und 9). Die Scheibe 38, 118 besitzt eine dem von der Kreissymmetrie abweichenden Querschnittsbereich 56, 70 entsprechend ausgeführte Öffnung 138, 140 und sind unverlierbar auf die Achse 18 bzw. die Antriebswelle 12 aufgepreßt. Das Druckstück 58, 72 ist in Schwenkrichtung 42, 44 über einen Formschluß mit der Antriebswelle 12 bzw. der Achse 18 verbunden, und zwar über sechs große tragende Flächen 84, 86, 88, 90, 92, 94 eines Sechskants (Fig. 9) und kann dadurch leicht mit dem Hebel 14, 24 von der Antriebswelle 12 bzw. der Achse 18 abgezogen bzw. demontiert werden. Um das Druckstück 58, 72 und insbesondere den Antriebshebel 14 und den Lenkerhebel 24 spielfrei zu lagern, ist der von der Kreissymmetrie abweichende Querschnittsbereich 56, 70 in Montagerichtung 28 mit einem zunehmenden Durchmesser 80, 82 ausgeführt, auf den das Druckstück 58, 72 kraftschlüssig spielfrei fixierbar ist.

### Bezugszeichen

- 10: Hebelgetriebe
- 12: Antriebswelle
- 14: Antriebshebel
- 16: Achse
- 18: Achse
- 20: Achse
- 22: Lenkerhebel
- 24: Lenkerhebel
- 26: Lenkerhebel
- 28: Montagerichtung
- 30: Anlageschulter
- 32: Anlageschulter
- 34: Anlageschulter
- 36: Scheibe
- 38: Scheibe
- 40: Scheibe
- 42: Schwenkrichtung
- 44: Schwenkrichtung
- 46: Seitenwand
- 48: Seitenwand
- 50: Querschnittsbereich
- 52: Querschnittsbereich
- 54: Querschnittsbereich
- 56: Querschnittsbereich
- 58: Druckstück
- 60: Öffnung
- 62: Außenkonus
- 64: Befestigungselement
- 66: Innenkonus
- 68: Anlageschulter
- 70: Querschnittsbereich
- 72: Druckstück
- 74: Öffnung
- 76: Außenkonus
- 78: Innenkonus
- 80: Durchmesser
- 82: Durchmesser
- 84: Fläche
- 86: Fläche
- 88: Fläche
- 90: Fläche
- 92: Fläche
- 94: Fläche
- 96: Deckseite
- 98: Deckseite
- 100: Einbuchtung
- 102: Einbuchtung
- 104: Platine
- 106: Wischerlager
- 108: Wischerlager
- 110: Gestänge
- 112: Wischhebel
- 114: Lager
- 116: Lager
- 118: Scheibe
- 120: Spielpassung
- 122: Abflachung
- 124: Abflachung
- 126: Öffnung
- 128: Abflachung
- 130: Abflachung
- 132: Windlaufabdeckung
- 134: Abdichtung
- 136: Gewinde
- 138: Öffnung
- 140: Öffnung

## Patentansprüche

1. Vorrichtung zum Befestigen eines Wischarms, der über ein Hebelgetriebe (10) angetrieben wird, das einen mit einer Antriebswelle (12) drehfest verbundenen Antriebshebel (14) und einen mit einer Achse (16, 18, 20) verbunden Lenkerhebel (22, 24, 26) aufweist, die gelenkig mit einem mit dem Wischarm verbundenen Wischhebel (112) verbunden sind, **dadurch gekennzeichnet, daß** der Lenkerhebel (22, 24, 26) in Montagerichtung (28) über eine Scheibe (36, 38, 40) auf einer Anlageschulter (30, 32, 34) auf der Achse (16, 18, 20) abgestützt ist, und daß die Scheibe (36, 38) auf die Achse (16, 18) kraftschlüssig aufgepreßt ist.

2. Vorrichtung nach Anspruch 1, **dadurch gekennzeichnet, daß** die Achse (16) in Schwenkrichtung (42, 44) fest mit der Scheibe (36) und die Scheibe (36) in Schwenkrichtung (42, 44) formschlüssig mit dem Lenkerhebel (22) verbunden ist.

3. Vorrichtung nach Anspruch 2, **dadurch gekennzeichnet, daß** die Scheibe (36) und der Lenkerhebel (22) über eine Spielpassung (120) in Schwenkrichtung (42, 44) verbunden sind.

4. Vorrichtung nach Anspruch 2 oder 3, **dadurch gekennzeichnet, daß** der Lenkerhebel (22) die Scheibe (36) mit Seitenwänden (46, 48) in Schwenkrichtung (42, 44) formschlüssig umgreift.

5. Vorrichtung nach Anspruch 4, **dadurch gekennzeichnet, daß** die Seitenwände (46, 48) in Montagerichtung (28) von einem von der Kreissymmetrie abweichenden kleineren Querschnittsbereich (50) in einen größeren Querschnittsbereich (52) übergehend ausgeführt sind.

6. Vorrichtung nach Anspruch 1, **dadurch gekennzeichnet, daß** die Achse (20) einen von der Kreissymmetrie abweichenden Querschnittsbereich (54) aufweist und der Lenkerhebel (26) die Achse (20) in diesem Bereich (54) formschlüssig umgreift.

7. Vorrichtung nach Anspruch 1, **dadurch gekennzeichnet, daß** die Achse (18) einen von der Kreissymmetrie abweichenden Querschnittsbereich (56) aufweist und mit einem zwischen der Achse (18) und dem Lenkerhebel (24) eingelegten Druckstück (58), das eine dem von der Kreissymmetrie abweichenden Querschnittsbereich (56) entsprechend ausgeführte Öffnung (60) aufweist und die Achse (18) formschlüssig umgreift und einen Außenkonus (62) aufweist, mit dem es durch ein lösbares Befestigungselement (64) auf der Achse (18) in einen entsprechend geformten Innenkonus (66) des Lenkerhebels (24) gedrückt und gemeinsam mit dem Lenkerhebel (24) in axialer Richtung auf der Anlageschulter (32) fixiert ist.

8. Vorrichtung nach einem der vorhergehenden Ansprüche, **dadurch gekennzeichnet, daß** der Antriebshebel (14) in Montagerichtung (28) an einer Anlageschulter (68) auf der Antriebswelle (12) abgestützt ist.

9. Vorrichtung nach Anspruch 8, **dadurch gekennzeichnet, daß** die Antriebswelle (12) zumindest einen von der Kreissymmetrie abweichenden Querschnittsbereich (70) aufweist und mit einem zwischen der Antriebswelle (12) und dem Antriebshebel (14) eingelegten Druckstück (72), das eine dem von der Kreissymmetrie abweichenden Querschnittsbereich (70) entsprechend ausgeführte Öffnung (74) aufweist und die Antriebswelle (12) formschlüssig umgreift und einen Außenkonus (76) aufweist, mit dem es durch ein lösbares Befestigungselement (64) auf der Antriebswelle (12) in einen entsprechend geformten Innenkonus (78) des Antriebshebels (14) gedrückt und gemeinsam mit dem Antriebshebel (14) in axialer Richtung auf der Anlageschulter (68) fixiert ist.

10. Vorrichtung nach einem der Ansprüche 7 bis 9, **dadurch gekennzeichnet, daß** der von der Kreissymmetrie abweichende Querschnittsbereich (56, 70) der Antriebswelle (12) und/oder der Achse (18) zumindest in einem Bereich in Montagerichtung (28) einen zunehmenden Durchmesser (80, 82) aufweist und das. Druckstück (58, 72) auf dem Querschnittsbereich (56, 70) kraftschlüssig spielfrei fixiert ist.

11. Vorrichtung nach einem der Ansprüche 7 bis 10, **dadurch gekennzeichnet, daß** das Druckstück (58, 72) und die Antriebswelle (12) und/oder die Achse (18) über eine bis zwölf große tragende Flächen (84, 86, 88, 90, 92, 94) formschlüssig verbunden sind.

12. Vorrichtung nach einem der vorhergehenden Ansprüche, **dadurch gekennzeichnet, daß** der Lenkerhebel (22, 24, 26) ein Blechteil ist.

13. Vorrichtung nach Anspruch 12, **dadurch gekennzeichnet, daß** der Lenkerhebel (22, 26) in einer Deckseite (96, 98) um die Verbindungsstelle mit der Achse (16, 20) eine topfförmige Einbuchtung (100, 102) aufweist.

## Claims

1. Device for fixing a wiper arm which is driven via a lever mechanism (10) which has a drive lever (14) connected in a rotationally fixed manner to a drive shaft (12) and a control lever (22, 24, 26) connected to an axle (16, 18, 20), the said levers being connected in an articulated manner to a wiper lever (112), which is connected to the wiper arm, **characterized in that** the control lever (22, 24, 26) is supported in the installation direction (28) on a bearing shoulder (30, 32, 34) on the axle (16, 18, 20) via a disc (36, 38, 40), and the disc (36, 38,) is pressed frictionally onto the axle (16, 18).

2. Device according to Claim 1, **characterized in that** the axle (16) is connected to the disc (36) fixedly in the pivoting direction (42, 44) and the disc (36) is connected to the control lever (22) in a form-fitting manner in the pivoting direction (42, 44).

3. Device according to Claim 2, **characterized in that** the disc (36) and the control lever (22) are connected in the pivoting direction (42, 44) via a loose fit (120).

4. Device according to Claim 2 or 3, **characterized in that** the control lever (22) engages with side walls (46, 48) around the disc (36) in a form-fitting manner in the pivoting direction (42, 44).

5. Device according to Claim 4, **characterized in that** the side walls (46, 48) are designed in the manner such that they merge in the installation direction (28) from a smaller cross-sectional region (50) deviating from the circular symmetry into a larger cross-sectional region (52).

6. Device according to Claim 1, **characterized in that** the axle (20) has a cross-sectional region (54) deviating from the circular symmetry, and the control lever (26) engages around the axle (20) in this region (54) in a form-fitting manner.

7. Device according to Claim 1, **characterized in that** the axle (18) has a cross-sectional region (56) deviating from the circular symmetry and with a pressure-exerting component (58) which is placed between the axle (18) and the control lever (24), has an opening (60) which is designed in a manner such that it corresponds to the cross-sectional region (56) deviating from the circular symmetry, and engages around the axle (18) in a form-fitting manner and has an external cone (62) with which it is pressed by a releasable fixing element (64) on the axle (18) into a correspondingly shaped internal cone (66) of the control lever (24) and is fixed together with the control lever (24) in the axial direction on the bearing shoulder (32).

8. Device according to one of the preceding claims, **characterized in that** the drive lever (14) is supported in the installation direction (28) on a bearing shoulder (68) on the drive shaft (12).

9. Device according to Claim 8, **characterized in that** the drive shaft (12) has at least one cross-sectional region (70) deviating from the circular symmetry and with a pressure-exerting component (72) which is placed between the drive shaft (12) and the drive lever (14), has an opening (74), which is designed in a manner such that it corresponds to the cross-sectional region (70) deviating from the circular symmetry, and engages around the drive shaft (12) in a form-fitting manner and has an external cone (76) with which it is pressed by a releasable fixing element (64) on the drive shaft (12) into a correspondingly shaped internal cone (78) of the drive lever (14) and is fixed together with the drive lever (14) in the axial direction on the bearing shoulder (68).

10. Device according to one of Claims 7 to 9, **characterized in that** the cross-sectional region (56, 70) of the drive shaft (12) and/or of the axle (18), which region deviates from the circular symmetry, has an increasing diameter (80, 82) at least in one region in the installation direction (28) and the pressure-exerting component (58, 72) is fixed frictionally in a manner free from play on the cross-sectional region (56, 70).

11. Device according to one of Claims 7 to 10, **characterized in that** the pressure-exerting component (58, 72) and the drive shaft (12) and/or the axle (18) are connected in a form-fitting manner via one to 12 large supporting surfaces (84, 86, 88, 90, 92, 94).

12. Device according to one of the preceding claims, **characterized in that** the control lever (22, 24, 26) is a sheet-metal part.

13. Device according to Claim 12, **characterized in that** the control lever (22, 26) has, in a top side (96, 98), a cup-shaped depression (100, 102) around the connecting point to the axle (16, 20).

## Revendications

1. Dispositif pour fixer un bras d'essuie-glace qui est entraîné par l'intermédiaire d'une tringlerie (10), dont un levier d'entraînement (14) relié solidairement en rotation à un arbre d'entraînement (12) et une biellette (22, 24, 26) reliée à un axe (16, 18, 20) sont reliés de façon articulée à un levier d'essuie-glace (112) lui-même relié au bras d'essuie-glace,
**caractérisé en ce que**
la biellette (22, 24, 26) est appuyée dans le sens du montage (28) par l'intermédiaire d'une rondelle (36, 38, 40) sur un épaulement d'appui (30, 32, 34) prévu sur l'axe (16, 18, 20) et la rondelle (36, 38) est pressée sur l'axe (16, 18) par une liaison de force.

2. Dispositif selon la revendication 1,
**caractérisé en ce que**
l'axe (16) est relié rigidement à la rondelle (36) dans la direction du pivotement et la rondelle (36) est reliée à la biellette (22) dans la direction du pivotement (42, 44) par une liaison par complémentarité de forme.

3. Dispositif selon la revendication 2,
**caractérisé en ce que**
la rondelle (36) et la biellette (22) sont reliés par un ajustement avec jeu dans la direction du pivotement (42, 44).

4. Dispositif selon la revendication 2 ou 3,
**caractérisé en ce que**
la biellette (22) entoure la rondelle (36) par ses parois latérales (46, 48) en formant une liaison par complémentarité de forme dans la direction du pivotement (42, 44).

5. Dispositif selon la revendication 4,
**caractérisé en ce que**
les parois latérales (46, 48) ont une conformation qui passe, dans le sens du montage (28), d'une région de section (50) plus petite qui s'écarte de la symétrie de révolution, à une région de section plus grande (52).

6. Dispositif selon la revendication 1,
**caractérisé en ce que**
l'axe (20) présente une région de section (54) qui s'écarte de la symétrie de révolution et la biellette (26) entoure l'axe (20) dans cette région (54) en formant une liaison par complémentarité de forme.

7. Dispositif selon la revendication 1,
**caractérisé en ce que**
l'axe (18) présente une région de section (56) qui s'écarte de la symétrie de révolution, et il est prévu intercalée entre l'axe (18) et la biellette (24), une pièce de pression (58) dont une ouverture (60) d'une forme correspondant à la région de section (56) qui s'écarte de la symétrie de révolution, emboîte l'axe (18) en formant une liaison par complémentarité de forme, laquelle pièce de pression présente un cône extérieur (62) qui permet à un élément de fixation démontable (64) de la presser sur l'axe (18) dans un cône intérieur (66) de forme correspondante de la biellette (24) et de la fixer dans la direction axiale sur l'épaulement d'appui (32) conjointement avec la biellette (24).

8. Dispositif selon une des revendications précédentes,
**caractérisé en ce que**
le levier d'entraînement (14) est appuyé dans le sens du montage (28) contre un épaulement d'appui (68) formé sur l'arbre d'entraînement (12).

9. Dispositif selon la revendication 8,
**caractérisé en ce que**
l'arbre d'entraînement (12) présente au moins une région de section (70) qui s'écarte de la symétrie de révolution, et il est prévu une pièce de pression (72) intercalée entre l'arbre d'entraînement (12) et le levier d'entraînement (14), dont une ouverture (74) d'une forme correspondant à la région de section (70) qui s'écarte de la symétrie de révolution, emboîte l'arbre d'entraînement (12) en formant une liaison par complémentarité de forme, laquelle pièce de pression présente un cône extérieur (76) qui permet à un élément de fixation démontable (64) de la presser sur l'arbre d'entraînement (12) dans un cône intérieur (78) de forme correspondante du levier d'entraînement (14), et de la fixer dans la direction axiale sur l'épaulement d'appui (68), conjointement avec le levier d'entraînement (14).

10. Dispositif selon une des revendications 7 à 9,
**caractérisé en ce que**
la région de section (56, 70) de l'arbre d'entraînement (12) et/ou de l'axe (18) qui diffère de la symétrie de révolution présente, au moins dans une région, un diamètre (80, 82) qui croît dans le sens du montage (28), et la pièce de pression (58, 72) est arrêtée sur la région de section (56, 70) sans jeu et avec liaison par action de force.

11. Dispositif selon une des revendications 7 à 10,
**caractérisé en ce que**
la pièce de pression (58, 72) et l'arbre d'entraînement (12) et/ou l'axe (18) sont assemblés par complémentarité de forme, par l'intermédiaire de une à douze grandes facettes de portée (84, 86, 88, 90, 92, 94).

12. Dispositif selon une des revendications précédentes,
**caractérisé en ce que**
la biellette (22, 24, 26) est une pièce de tôle.

13. Dispositif selon la revendication 12,
**caractérisé en ce que**
la biellette (22, 26) présente dans une face couvercle (96, 98) une embouchure (100, 102) en forme de godet, autour de la zone d'assemblage avec l'axe (16, 20).
